# EUROPÄISCHE PATENTSCHRIFT

(11) **EP 0 568 815 B1**
(45) Veröffentlichungstag und Bekanntmachung des Hinweises auf die Patenterteilung: **04.06.1997**
(21) Anmeldenummer: 93105350.8
(22) Anmeldetag: 31.03.1993
(51) Int. Cl.: C08L 23/16, C08L 23/02

(54) **Folie oder Formkörper aus einem thermoplastischen Kunststoff mit einem Terpolymergehalt**
Sheet or article made of a thermoplastic resin containing a terpolymer
Feuille ou objet formé à base d'une matière thermoplastique contenant un terpolymère

(30) Priorität: 04.04.1992 DE 4211416
(43) Veröffentlichungstag der Anmeldung: 10.11.1993
(73) Patentinhaber: Benecke-Kaliko Aktiengesellschaft, D-30419 Hannover (DE)
(72) Erfinder: Kopytko, Walter, Dipl.-Ing., W-8264 Waldkraiburg (DE)
(74) Vertreter: Hagemann, Heinrich, Dr.rer.nat., Dipl.-Chem.

(56) Entgegenhaltungen:
- EP-A- 0 213 254
- EP-A- 0 248 543
- EP-A- 0 256 724
- EP-A- 0 312 664
- EP-A- 0 376 213
- DE-A- 2 642 090

## Beschreibung

Die Erfindung betrifft eine Folie und einen Formkörper aus einem thermoplastischen Kunststoff auf der Basis eines teilkristallinen Ethylen-Propylen-Dien-Terpolymers, eines Homo- und/oder Copolymers eines Alkens und eines polymeren Modifizierungsmittels, wobei der Kunststoff gegebenenfalls Stabilisatoren, Füllstoffe, Gleitmittel, Farbmittel, Flammschutzmittel sowie andere übliche Zusatzstoffe enthält.

Kunststoffolien der oben beschriebenen Art sowie damit hergestellte Form- und Verbundteile gehen aus der DE-A-40 15 748 hervor. Der Kunststoffanteil einer derartigen Folie enthält a) 55 bis 95 Gew.-Teile mindestens eines thermoplastischen Polyolefin-Elastomers oder -Elastomergemisches, bestehend aus einem heterophasigen Polypropylen-Block-Copolymer mit einem Ethylen-Propylen-Copolymeranteil von 15 bis 50 Gew.-% (bezogen auf 100 Gew.-Teile des Ethylen-Propylen-Block-Copolymers) und b) 45 bis 5 Gew.-Teile an anderen Polymeren, insbesondere in Form von Olefinen sowie styrolhaltigen Polymeren. Die Gesamtmenge an Ethylen und Propylen muß in dem Block-Copolymer 10 bis 50 Gew.-% betragen. Der vollständige Ersatz des Block-Copolymers durch ein statistisches Copolymer wird ausgeschlossen. Das Block-Copolymer soll aber bis zu 80 Gew.-%, vorzugsweise bis zu 35 Gew.-%, durch ein Ethylen-Propylen-Random- oder ein Block-Copolymer eines Ethlyengehaltes von 2 bis 10 Gew.-% ersetzt werden können. Mit der bekannten Kunststoffolie sollen verbesserte Eigenschaften, insbesondere eine verbesserte Tiefziehfähigkeit sowie verbesserte Narbstandsfestigkeit, erzielbar sein. Darüber hinaus soll sie flexibel sein und die Spezifikationsanforderungen der Autornobilindustrie, z.B. hinsichtlich Alterungs- und Fog-Eigenschaften, erfüllen. Es hat sich bei Überprüfungen jedoch gezeigt, daß diese Folie bezüglich der Tiefziehfähigkeit sowie der Narbstandsfestigkeit verbesserungsbedürftig ist.

Schließlich ist noch folgender Stand der Technik anzugeben: Aus der EP-A-0 248 543 geht eine thermoplastische Elastomermischung hervor, die 20 bis 80 Gew.% Polypropylenharz, 5 bis 80 % eines aus Einheiten von Ethylen, Alkyl(meth)acrylat und ungesättigten Dicarbonsäureanhydriden bestehenden Polymers und 5 bis 70 Gew.% eines Kautschuks, wie eines Ethylen-Propylen-Dien-Copolymerkautschuks, enthält. Gegenstände aus dieser Elastomermischung werden vorzugsweise durch Spritzguß, Strangpressen, Blasformen und Kalandrieren hergestellt. Die EP-A-0 376 213 offenbart ein thermoplastisches Elastomer, das durch Vernetzen einer Mischung hergestellt wird, die eine Kautschukkomponente und ein Polyolefinharz enthält. Als Kautschukkomponente ist primär ein Ethylen-Propylen-Copolymerkautschuk vorgesehen. Als Zumischung hierfür wird amorphes EPDM (Ethylen-Propylen-Dien-Terpolymer) erwähnt.

Der Erfindung liegt daher die Aufgabe zugrunde, die eingangs bezeichnete Folie bzw. den Formkörper so weiterzubilden, daß die Folie bei der Weiterverarbeitung nach dem Tiefziehverfahren eine verbesserte Tiefziehfähigkeit sowie Narbstandsfestigkeit zeigt und dem Formkörper verbesserte Eigenschaften, wie verbesserte Flexibilität, vermittelt werden.

Erfindungsgemäß wird die obige Aufgabe dadurch gelöst, daß der thermoplastische Kunststoff ein teilkristallines statistisches Ethylen-Propylen-Dien-Terpolymer enthält, das zu mindestens 30 % vernetzt ist, der thermoplastische Kunststoff ein thermoplastisches Elastomer darstellt, auf 70 bis 30 Gew.-Teile des teilkristallinen Ethylen-Propylen-Dien-Terpolymers etwa 30 bis 70 Gew.-Teile eines Homo- und/oder Copolymers von Ethylen und/oder Propylen entfallen und der thermoplastische Kunststoff mindestens etwa 10 Gew.-% eines teilkristallinen und/oder amorphen polymeren Modifizierungsmittels enthält, wobei der gewichtsprozentuale Summenanteil des Ethylens und Propylens in dem teilkristallinen Ethylen-Propylen-Dien-Terpolymer zwischen etwa 15 und 91 Gew.-% liegt, ausgenommen ein Ethylen-Copolymer mit wiederkehrenden ungesättigten Dicarbonsäureanhydrid-Einheiten.

Im Sinne der Erfindung sollen unter den Begriff "thermoplastischer Kunststoff" Kunststoffgemische, Polymer-Blends, Polymer-Legierungen bzw. -pfropfcopolymerisate und dergleichen fallen. Dieser Begriff soll demzufolge im Bereiche der Kunststofftechnik weitestgehend verstanden werden.

Wesentlicher Bestandteil des erfindungsgemäßen thermoplastischen Kunststoffs ist demzufolge ein teilkristallines statistisches Ethylen-Propylen-Dien-Terpolymer, demzufolge kein Block-Terpolymer. Dieses statistische Terpolymer ist zu mindestens 30% vernetzt. Vorzugsweise ist das Terpolymer in dem thermoplastischen Kunststoff zu etwa 50 bis 100%, insbesondere 70 bis 95% vernetzt. Der Ausgangskristallisationsgrad liegt vorzugsweise zwischen etwa 20 bis 60%, wobei er mit steigender Vernetzung abfällt. Bei der "Dien"-Komponenten des erfindungsgemäß eingesetzten Terpolymers, die im wesentlichen für die Vernetzung verantwortlich ist, kann es sich inbesondere um Dicyclopentadien, 1,4-Hexadien und/oder 5-Ethyliden-2-norbornen handeln.

Die Vernetzung des Terpolymers erfolgt zweckmäßigerweise, wenn es bereits in Vermischung mit dem Homo- und/oder Copolymer des Ethylens und/oder des Propylens vorliegt. Dabei kann das Terpolymer, beispielsweise in Form des Ethylen-Propylen-Dien-Kautschuks (EPDM), zusammen mit beispielsweise dem Ethylen-Propylen-Copolymer unter Zusatz geeigneter Vernetzungsmitteln, wie Peroxid-, Epoxid- und Silan-Verbindungen und dergleichen, in einem üblichen Mischaggregat, wie in Innenmischern, Zweischnecken-Extrudern und dergleichen, unter geeigneten Temperatur-, Scher-, Misch- und Druckbedingungen vernetzt, zerteilt und dispergiert werden. Hierbei können die später noch angesprochenen Zusatzstoffe gleichzeitig eingemischt werden. Durch einfache Versuche läßt sich feststellen, ob der Vernetzungsgrad mindestens 30% beträgt. Der sich einstellende Vernetzungsgrad läßt sich beispielsweise dadurch bestimmen, indem der thermoplastische Elastomer mit Lösungsmitteln behandelt wird, so daß das vernetzte Terpolymer als Gel zurückbleibt und aus dessen Menge Rückschlüsse auf den Vernetzungsgrad gezogen werden können. Die Bestimmung des Vernetzungsgrades kann auch nach DIN 16892 erfolgen.

Der gewichtsprozentuale Summenanteil des Ethylens und Propylens in dem statistischen Ethylen-Propylen-Dien-Terpolymer liegt zwischen etwa 15 und 91 Gew.-%, vorzugsweise zwischen etwa 52 bis 91 Gew.-%. Insbesondere liegt der Ethylengehalt des statistischen Terpolymers bei mindestens etwa 65 Gew.-%.

Auf 70 bis 30 Gew.-Teile des statistischen Ethylen-Propylen-Dien-Terpolymers entfallen im Rahmen der Erfindung etwa 30 bis 70 Gew.-Teile des Homo- und/oder Copolymers des Ethylens und/oder Propylens. Vorzugsweise entfallen auf etwa 60 bis 30 Gew.-Teile Ethylen-Propylen-Dien-Terpolymer etwa 40 bis 70 Gew.-Teile Ethylen-Propylen-Copolymer.

Wird für die Zwecke der Erfindung ein Ethylen-Propylen-Copolymer eingesetzt, dann enthält dieses vorzugsweise etwa 5 bis 20 Gew.-% Ethylen. Dabei ist es bevorzugt, wenn das Ethylen-Propylen-Copolymer eine enge Molmasse-Verteilung mit einer Uneinheitlichkeit U von weniger als etwa 6, insbesondere weniger als 4, aufweist. Mit besonderem Vorteil wird auch ein Ethylen-Copolymer eingesetzt, das etwa 5 bis 20 Gew.-% Octen oder Buten als Comonomer enthält. Vorteilhaft ist es, wenn das Homo- und/oder Copolymer des Ethylens oder Propylens beim Kalandrieren einen Schmelzindex MFI(230/2,16) von etwa 0,5 bis 10 g/10 min, insbesondere etwa 0,8 bis 2,5 g/10 min, und beim Extrudieren einen Schmelzindex von mindestens etwa 0,8 g/10 min, insbesondere etwa 2,5 bis 25 g/10 min, aufweist.

Im Handel sind bereits thermoplastische Elastomere erhältlich, die sowohl das teilkristalline statistische Ethylen-Propylen-Dien-Terpolymer wie auch das Homo- und/oder Copolymer des Ethylens und/oder des Propylens enthalten, wobei diese ohne und/oder mit hochmolekularen weichmachenden Komponenten geliefert sind. Hierzu zählen die Handelsprodukte MILASTOMER ® (Ethylen-Propylen-Dicyclopentadien oder Ethyliden-norbornen-Terpolymer, vertrieben von der Firma Mitsui, Japan), KELPROX ® (Ethylen-Propylen-Ethyliden-norbornen-Terpolymer, vertrieben von der Firma DSM, Niederlande) und Santoprene ® (Ethylen-Propylen-Ethyliden-norbornen-Terpolymer, vertrieben von der Firma AES (Jointventure der Firmen Exxon und Monsanto)).

Dritter wesentlicher Bestandteil des thermoplastischen Kunststoffs ist ein teilkristallines und/oder amorphes polymeres Modifizierungsmittel, das darin in einer Menge von mindestens 5 Gew.-%, insbesondere zwischen etwa 8 bis 80 Gew.-%, enthalten ist. Die Kristallinität dieses Modifizierungsmittels liegt zwischen etwa 0 % und 40%, vorzugsweise zwischen etwa 5% bis 25%.

Bei dem teilkristallinen und/oder amorphen polymeren Modifizierungsmittel handelt es sich insbesondere um ein Styrol-Copolymer, insbesondere ein elastomermodifiziertes Styrol-Acrylnitril(SAN)-Copolymer, ein Ethylen-Acrylsäure- und/oder Ethylen-Acrylsäureester-Copolymer, Propylen-Acrylsäure- und/oder Propylen-Acrylsäureester-Copolymer, ein niedrigdichtes und/oder hochdichtes Polyethylen, ein Ethylenvinylacetat-Copolymer, ein Ethylenglycidylmethacrylat-Copolymerisat, ein Polyurethan, ein Polycaprolacton, ein Polyetheramid, ein polyaliphatisches Imid-Copolymer und/oder ein Styrol-Block-Copolymer in Form eines Styrol-hydrierten Dien- oder Styrol-Dien-Block-, Diblock- oder Triblock-Copolymers, z.B. Styrol-Ethylen-Propylen-Block-Copolymer (SEP), eines Styrol-Ethylen-Butadien-Styrol-Block-Copolymer (SEBS), eines Styrol-Ethylen-Butadien-Block-Copolymer(SEB) und/oder ein Styrol-Butadien-Styrol-Block-Copolymer(SBS). Dabei ist das elastomermodifizierte SAN-Copolymer vorzugsweise ein Acrylnitril-Ethylen-Propylen-Dien-Styrol-Copolymer (A-EPDM-S), ein Acrylnitril-Styrol-Acrylester-Copolymer (ASA) und/oder ein Poly(Acrylonitril-Co-Butadien-Co-Styrol) (ABS).

Das Modifizierungsmittel hat Einfluß auf folgende Eigenschaften: Es dient zur Regelung der Schmelzfestigkeit und -viskosität, Zähigkeit, Kalandrierbarkeit, Extrudierbarkeit und ähnlicher Eigenschaften. Es kann weiter die Kristallisationsneigung der Folien bzw. der Fertigteile erschweren oder verhindern, was die Tiefzieheigenschaften und Narbstandfestigkeit positiv beeinflußt. Modifikatoren können auch die Mischbarkeit positiv beeinflussen bzw. die Benetzbarkeit und Verklebbarkeit verbessern. In einigen Fällen können Modifikatoren die innere und äußere Weichmachung oder Steifmachung von Matrixpolymeren verursachen bzw. wünschenswert beeinflussen.

In der Mehrzahl der praktischen Anwendungsfälle enthält der erfindungsgemäße thermoplastische Kunststoff Füllstoffe. Vorzugsweise beträgt der Füllstoffanteil etwa 8 bis 28 Gew.-%. Es können alle üblichen Füllstoffe herangezogen werden, insbesondere in Form von Kaliumaluminiumsilicat, Talkum, Kreide, Kaolin, Metalloxiden, insbesondere Titandixoid, und/oder Ruß. Schließlich können weitere übliche Zusatzstoffe herangezogen werden, insbesondere Stabilisatoren, wie Oxidationsverzögerer und Wärmestabilisatoren, z.B. sterisch gehinderte Phenole, Hydrochinone, substituierte Vertreter dieser Gruppe, Phosphite, Phosphonite und/oder Mischungen derselben; UV-Stabilisatoren, z.B. verschiedene niedermolekulare und auch hochmolekulare substituierte Resorcine, Salicylate, Benzotriazole und Benzophenone und/oder Mischungen derselben und dergleichen, Gleitmittel, wie C₁₂- bis C₂₆-Fettsäuren, Fettalkohole, Fettsäureester und -amide und/oder Mischungen derselben und dergleichen, sowie Farbmittel, wie organische Farbstoffe und Pigmente, z.B. Titandioxid, Phtalocyanine oder Ruß; Flammschutzmittel, wie Ammoniumpolyphosphat, phosphat, Zinkborat und dergleichen.

Der erfindungsgemäße Kunststoff läßt sich in vielfältiger Weise weiterverarbeiten, wie z.B. im Spritzguß-, Extrusions- und Kalandrierverfahren. Die erfindungsgemäße Folie läßt sich auch nach dem Tiefzieh-, Luftpresse- oder Membranpresseverfahren (Vermischung der Ausgangsmaterialien) weiterverarbeiten. Tiefgezogene Formteile bzw. Verbundgebilde aus der erfindungsgemäßen Folie können beispielsweise mit besonderem Vorteil für Flugzeuge und Kraftfahrzeuge, für Kraftfahrzeuginnenverkleidungen oder -verkleidungsteilen, vorzugsweise Schalttafeln oder Armaturenbretter, Säulen, Kraftfahrzeugseitenverkleidungen, -türverkleidungen, -ablagen und -außenverkleidungen verwendet werden. Auch kann die erfindungsgemäße Folie mit üblichen Klebetechniken auf die verschiedensten Substrate aufgeklebt werden. Sie kann mit weiteren Schichten, wie Schutzschichten, versehen werden. Schließlich können auch Haftschichten auf der Rückseite angebracht werden, gegebenenfalls auch mit geeigneten Schaumschichten kaschiert oder verbunden werden kann. Bei allen Weiterverarbeitungen, insbesondere beim Tiefziehverfahren, hat es sich gezeigt, daß die Erfindung hier eine besondere Eignung zeigt und durch eine besondere Narbstandsfestigkeit gekennzeichnet ist. Ferner zeichnet sich die Folie und der Formkörper gemäß der Erfindung durch Witterungsbeständigkeit aus.

Eine erfindungsgemäße Folie zeigt darüber hinaus weitere wertvolle Eigenschaften, so günstige Härte, gute Ausgangsreißdehnung sowie gute Rest-Reißdehnung nach Wärmealterung und UV-Bestrahlung.

Die Erfindung soll anhand der nachfolgenden Beispiele noch näher erläutert werden:

### Beispiele 1 bis 4

In der nachfolgenden Tabelle I werden Rezepturen der verschiedenen Beispiele angegeben. Anhand dieser Rezepturen wurden mittels eine 4-Walzenkalanders Folien einer Stärke von 1,2 mm hergestellt. Die Eigenschaften dieser Folien werden ebenfalls in der nachfolgenden Tabelle I bezeichnet. Die nachfolgende Tabelle II gibt nähere Auskünfte über die genaue Zusammensetzung der verschiedenen Copolymerisate.

**Tabelle I**

| Gew.-Teile | 1 | 2 | 3 | 4 |
|---|---|---|---|---|
| TPE-1 | 50 | - | 49 | 65 |
| TPE-2 | - | 50 | - | - |
| Random-Polypropylen-1 | 30 | 30 | - | - |
| Homo-PP | - | - | - | 10 |
| LLDPE (Buten) | 15 | 15 | - | - |
| LLDPE (Octen-1) | - | - | 15 | 6 |
| Modifikator | | | | |
| ASA | 15 | 15 | - | - |
| AES | - | - | 30 | 15 |
| SEP-Diblock 29/71 | 4 | 4 | - | 4 |
| EVA-Terpolymer | - | - | 6 | - |

| Zusatzmittel | 1 | 2 | 3 | 4 |
|---|---|---|---|---|
| (Gew.-Teile) | | | | |
| Füllstoff (K-A-S) | 10 | 20 | 10 | 10 |
| Füllstoff (Ruß) | 1,4 | 1,4 | 1,4 | 1,4 |
| Flammschutz-Mg(OH)₂ | 10 | - | - | - |
| Gleitmittel (Calciumstearat) | 0,3 | 0,3 | 0,3 | 0,3 |
| Stabilisator Irganox® 1010 | 0,12 | 0,12 | 0,12 | 0,12 |
| Stabilisator Irgaphos® 168 | 0,08 | 0,08 | 0,08 | 0,08 |
| Stabilisator Tinuvin® 770 | 0,12 | 0,12 | 0,12 | 0,12 |
| Stabilisator Chimassorb® 944 | 0,12 | 0,12 | 0,12 | 0,12 |

| Eigenschaften | | | | |
|---|---|---|---|---|
| Härte (Shore D-15 sec) DIN 53505 | 44 | 34 | 28 | 29 |
| Ausgangsreißdehnung DIN 52910 | 631 | 750 | 285 | 561 |
| Rest-Reißdehnung nach: | | | | |
| a) Wärmealterung (500 h/120°C) | 504 | 600 | 230 | 530 |
| b) UV-Bestrahlung 480 h (entspr. DIN 75220) | 440 | 525 | 204 | 400 |

Anmerkung: Die Zahlenangaben, die im Zusammenhang mit verschiedenen Bestandteilen der Beispiele angegeben sind, sind Gewichtsprozente.

Der weiteren Erläuterung der oben angegebenen Abkürzungen dient die folgende Tabelle, in der die Zahlen %-Anteile bedeuten.

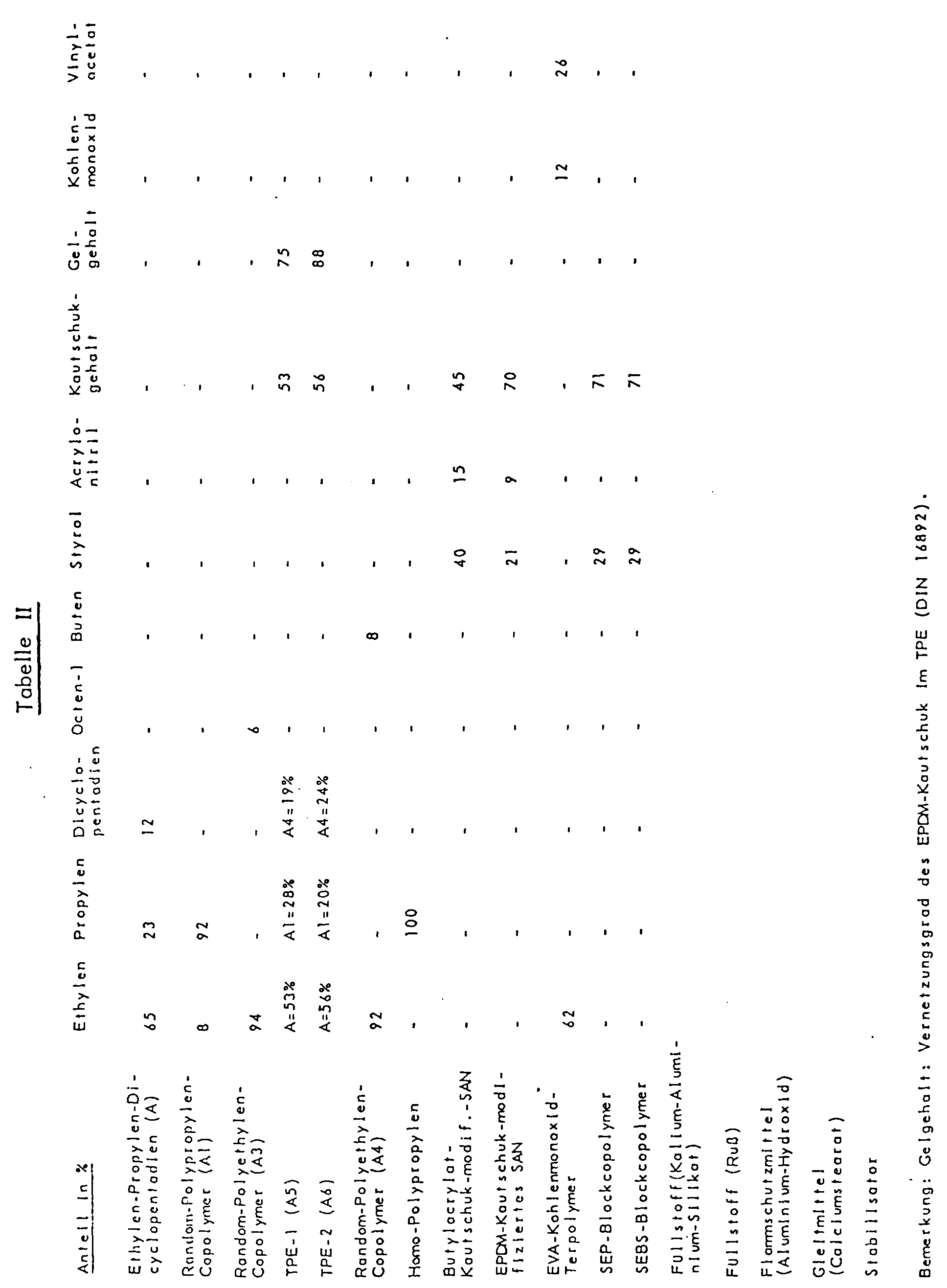

## Patentansprüche

1. Folie oder Formkörper aus einem thermoplastischen Kunststoff auf der Basis eines teilkristallinen Ethylen-Propylen-Dien-Terpolymers, eines Homo- und/oder Copolymers eines Alkens und eines polymeren Modifizierungsmittels, wobei der Kunststoff gegebenenfalls Stabilisatoren, Füllstoffe, Gleitmittel, Farbmittel, Flammschutzmittel sowie andere übliche Zusatzstoffe enthält, dadurch **gekennzeichnet**, daß der thermoplastische Kunststoff ein teilkristallines statistisches Ethylen-Propylen-Dien-Terpolymer enthält, das zu mindestens 30% vernetzt ist, der thermoplastische Kunststoff ein thermoplastisches Elastomer darstellt, auf 70 bis 30 Gew.-Teile des teilkristallinen Ethylen-Propylen-Dien-Terpolymers 30 bis 70 Gew.-Teile eines Homo- und /oder Copolymers von Ethylen und/oder Propylen entfallen und der thermoplastische Kunststoff mindestens 5 Gew.-% eines teilkristallinen und/oder amorphen polymeren Modifizierungsmittels enthält, wobei der gewichtsprozentuale Summenanteil des Ethylens und Propylens in dem teilkristallinen Ethylen-Propylen-Dien-Terpolymer zwischen 15 und 91 Gew.-% liegt, ausgenommen ein Ethylen-Copolymer mit wiederkehrenden ungesättigten Dicarbonsäureanhydrid-Einheiten.

2. Folie oder Formkörper nach Anspruch 1, dadurch gekennzeichnet, daß der Vernetzungsgrad des statistischen Terpolymers in dem thermoplastischen Kunststoff 50 bis 100 %, insbesondere etwa 70 bis 95%, beträgt.

3. Folie oder Formkörper nach Anspruch 1 oder 2, dadurch gekennzeichnet, daß der gewichtsprozentuale Summenanteil des Ethylens und Propylens im statistischen Terpolymer 52 bis 91 Gew.-% beträgt.

4. Folie oder Formkörper nach mindestens einem der vorhergehenden Ansprüche, dadurch gekennzeichnet, daß das statistische Terpolymer mindestens 65 Gew.-% Ethylen enthält.

5. Folie oder Formkörper nach mindestens einem der Ansprüche 1 bis 4, dadurch gekennzeichnet, daß der Kunststoff Füllstoffe enthält.

6. Folie oder Formkörper nach Anspruch 5, dadurch gekennzeichnet, daß der Kunststoff 8 bis 28 Gew.-% Füllstoffe enthält.

7. Folie oder Formkörper nach mindestens einem der vorhergehenden Ansprüche, dadurch gekennzeichnet, daß die Füllstoffe in Form von Kaliumaluminiumsilicat, Talkum, Kreide, Kaolin, Metalloxide, insbesondere Titandioxid, und/oder Ruß vorliegen.

8. Folie oder Formkörper nach mindestens einem der vorhergehenden Ansprüche, dadurch gekennzeichnet, daß der thermoplastischen Kunststoff 60 bis 30 Gew.-Teile Ethylen-Propylen-Dien-Terpolymer auf 40 bis 70 Gew.-Teile Ethylen-Propylen-Copolymer entfallen.

9. Folie oder Formkörper nach mindestens einem der vorhergehenden Ansprüche, dadurch gekennzeichnet, daß das Homo- und/oder Copolymer des Ethylens und/oder des Propylens beim Kalandrieren einen Schmelzindex MFI (230/2,16) von 0,5 bis 10 g/10 min, insbesondere 0,8 bis 2,5 g/10 min, und beim Extrudieren einen Schmelzindex von mindestens 0,8 g/10 min, insbesondere 2,5 bis 25 g/10 min, aufweist.

10. Folie oder Formkörper nach mindestens einem der vorhergehenden Ansprüche, dadurch gekennzeichnet, daß das Ethylen-Propylen-Copolymer 5 bis 20 Gew.-% Ethylen enthält.

11. Folie oder Formkörper nach mindestens einem der vorhergehenden Ansprüche, dadurch gekennzeichnet, daß das Homopropylen-, Propylen-Ethylen- oder Ethylen-Propylen-Copolymer eine enge Molmasse-Verteilung mit einer Uneinheitlichkeit U von weniger als 6, insbesondere weniger als 4, aufweist.

12. Folie oder Formkörper nach mindestens einem der vorhergehenden Ansprüche, dadurch gekennzeichnet, daß das Copolymer des Alkens ein Ethylen-Copolymer ist, das 5 bis 20 Gew.-% Octen oder Buten als Comonomer enthält.

13. Folie oder Formkörper nach mindestens einem der vorhergehenden Ansprüche, dadurch gekennzeichnet, daß das teilkristalline und/oder amorphe polymere Modifizierungsmittel einen Kristallinitätsgrad von 0 bis 40%, insbesondere 5 bis 25% aufweist.

14. Folie oder Formkörper nach mindestens einem der vorhergehenden Ansprüche, dadurch gekennzeichnet, daß das teilkristalline und/oder amorphe polymere Modifizierungsmittel ein Styrol-Copolymer, insbesondere ein elastomermodifiziertes Styrol-Acrylnitril(SAN)-Copolymer, ein Ethylen-Acrylsäure- und/oder Ethylen-Acrylsäureester-Copolymer, Propylen-Acrylsäure- und/oder Propylen-Acrylsäureester-Copolymer, ein niedrigdichtes Polyethylen, ein Ethylenvinylacetat-Copolymer, ein Ethylenvinylacetat-Kohlenmonoxid-Terpolymer, ein Ethylenglycidylmethacrylat-Copolymerisat, ein Polyurethan, ein Polycaprolacton, ein Polyetheramid, ein polyaliphatisches Imid-Copolymer und/oder ein Styrol-Block-Copolymer in Form eines styrolhydriertes Dien- oder Styrol-Dien-Block-, -Diblock oder -Triblock-Copolymers, wie Styrol-Ethylen-Propylen-Block-Copolymer(SEP), eines Styrol-Ethylen-Butadien-Styrol-Block-Copolymer (SEBS), eines Styrol-Ethylen-Butadien-Block-Copolymer (SEB) und/oder ein Styrol-Butadien-Styrol-Block-Copolymer (SBS) ist.

15. Folie oder Formkörper nach Anspruch 14, dadurch gekennzeichnet, daß das elastomermodifizierte SAN-Copolymer ein Acrylnitril-Ethylen-Propylen-Dien-Styrol-Copolymer(A-EPDM-S), ein Acrylnitril-Styrol-Acrylester-Copolymer(ASA) und/oder ein Poly(Acrylonitril-Co-Butadien-Co-Styrol) (ABS) ist.

16. Tiefgezogene Formteile aus einer Folienbahn gemäß mindestens einem der vorhergehenden Ansprüche 1 bis 15 und damit hergestellte Verbundgebilde, insbesondere für Flugzeuge und Kraftfahrzeuge, für Kraftfahrzeuginnenverkleidungen oder -verkleidungsteile, vorzugsweise Schalttafeln oder Armaturenbretter, Säulen, Kraftfahrzeugseitenverkleidungen, -türverkleidungen, -ablagen und -außenverkleidungen.

## Claims

1. Sheet or moulding of a thermoplastic material based on a partly crystalline ethylene-propylene-diene terpolymer, a homopolymer and/or copolymer of an alkene and a polymer modifier, the plastic optionally containing stabilizers, fillers, lubricants, colouring agents, fireproofing agents and other conventional additives, characterized in that the thermoplastic material contains a partly crystalline, random ethylene-propylene-diene terpolymer, which is at least 30% crosslinked, the thermoplastic material constituting a thermoplastic elastomer, for 70 to 30 wt. parts of the partly crystalline ethylene-propylene-diene terpolymer there are 30 to 70 wt. parts of a homopolymer and/or copolymer of ethylene and/or propylene and the thermoplastic material contains at least 5 wt.% of a partly crystalline and/or amorphous, polymer modifier, the weight percentage sum fraction of the ethylene and propylene in the partly crystalline ethylene-propylene-diene terpolymer being between 15 and 91 wt.%, excluding an ethylene copolymer with recurring unsaturated dicarboxylic anhydride units.

2. Sheet or moulding according to claim 1, characterized in that the degree of crosslinking of the random terpolymer in the thermoplastic material is 50 to 100%, particularly approximately 70 to 95%.

3. Sheet or moulding according to claim 1 or 2, characterized in that the weight percentage sum fraction of the ethylene and propylene in the random terpolymer is 52 to 91 wt.%.

4. Sheet or moulding according to at least one of the preceding claims, characterized in that the random terpolymer contains at least 65 wt.% ethylene.

5. Sheet or moulding according to at least one of the claims 1 to 4, characterized in that the plastic contains fillers.

6. Sheet or moulding according to claim 5, characterized in that the plastic contains 8 to 28 wt.% fillers.

7. Sheet or moulding according to at least one of the preceding claims, characterized in that the fillers are in the form of potassium aluminosilicate, talc, chalk, kaolin, metal oxides, particularly titanium dioxide, and/or carbon black.

8. Sheet or moulding according to at least one of the preceding claims, characterized in that the thermoplastic material contains 60 to 30 wt. parts ethylene-propylene-diene terpolymer for 40 to 70 wt. parts ethylene-propylene copolymer.

9. Sheet or moulding according to at least one of the preceding claims, characterized in that the homopolymer and/or copolymer of the ethylene and/or propylene during calendering has a melt flow index MFI (230/2.16) of 0.5 to 10 g/10 min, particularly 0.8 to 2.5 g/10 min and on extruding a melt flow index of at least 0.8 g/10 min, particularly 2.5 to 25 g/10 min.

10. Sheet or moulding according to at least one of the preceding claims, characterized in that the ethylene-propylene copolymer contains 5 to 20 wt.% ethylene.

11. Sheet or moulding according to at least one of the preceding claims, characterized in that the homopropylene-propylene-ethylene or ethylene-propylene copolymer has a narrow molecular weight distribution with a non-uniformity U of less than 6, particularly less than 4.

12. Sheet or moulding according to at least one of the preceding claims, characterized in that the copolymer of alkene is an ethylene copolymer, which contains 5 to 20 wt.% octene or butene as the comonomer.

13. Sheet or moulding according to at least one of the preceding claims, characterized in that the partly crystalline and/or amorphous, polymer modifier has a degree of crystallization of 0 to 40%, particularly 5 to 25%.

14. Sheet or moulding according to at least one of the preceding claims, characterized in that the partly crystalline and/or amorphous, polymer modifier is a styrene copolymer, particularly an elastomer-modified styreneacrylonitrile (SAN) copolymer, an ethylene-acrylic acid and/or ethylene-acrylate copolymer, a propylene-acrylic acid and/or propylene-acrylate copolymer, a low density polyethylene, an ethylene vinyl acetate copolymer, an ethylene vinyl acetate-carbon monoxide terpolymer, an ethylene glycidyl methacrylate copolymer, a polyurethane, a polycaprolactone, a polyether amide, a polyaliphatic imide copolymer and/or a styrene block copolymer in the form of a styrene-hydrogenated diene or styrene-diene block, diblock or triblock copolymer, such as styrene-ethylene-propylene-block copolymer (SEP), a styrene-ethylene-butadiene-styrene block copolymer (SEBS), a styrene-ethylene-butadiene block copolymer (SEB) and/or a styrene-butadiene-styrene block copolymer (SBS).

15. Sheet or moulding according to claim 14, characterized in that the elastomer-modified SAN copolymer is an acrylonitrile-ethylene-propylene-diene-styrene copolymer (A-EPDM-S), an acrylonitrile-styrene-acrylate copolymer (ASA) and/or a poly(acrylonitrile-cobutadiene-costyrene) (ABS).

16. Deep drawn mouldings from a sheet web according to at least one of the claims 1 to 15 and the resulting composite structure, particularly for aircraft and motor vehicles, for vehicle inside panels or panel parts, preferably dashboards or control panels, columns, vehicle side panels, door panels, depositories and outer panels.

## Revendications

1. Feuille ou article façonné en une matière thermoplastique à base d'un terpolymère éthylène-propylène-diène partiellement cristallin, d'un homopolymère et/ou copolymère d'un alcène et d'un agent modificateur polymère, la matière plastique contenant éventuellement des agents stabilisants, des charges, des lubrifiants, des colorants, des agents d'ignifugeage ainsi que d'autres additifs classiques, caractérisée en ce que la matière thermoplastique contient un terpolymère éthylène-propylène-diène statistique partiellement cristallin qui est réticulé à 30 % au moins, la matière thermoplastique représente un élastomère thermoplastique, 30 à 70 parties en poids d'un homopolymère et/ou d'un copolymère d'éthylène et/ou de propylène correspondent à 70 à 30 parties en poids du terpolymère éthylène-propylène-diène partiellement cristallin et la matière thermoplastique contient au moins 5 % en poids d'un agent modificateur polymère partiellement cristallin et/ou amorphe, la somme des pourcentages en poids de l'éthylène et du propylène dans le terpolymère éthylène-propylène-diène partiellement cristallin se situant entre 15 et 91 % en poids, à l'exception d'un copolymère d'éthylène contenant des motifs anhydride d'acide dicarboxylique non saturé récurrents.

2. Feuille ou article façonné suivant la revendication 1, caractérisé en ce que le degré de réticulation du terpolymère statistique dans la matière thermoplastique s'élève à 50-100 %, notamment à environ 70-95 %.

3. Feuille ou article façonné suivant la revendication 1 ou 2, caractérisé en ce que la somme des pourcentages en poids de l'éthylène et du propylène dans le terpolymère statistique s'élève à 52-91 % en poids.

4. Feuille ou article façonné suivant l'une au moins des revendications précédentes, caractérisé en ce que le terpolymère statistique contient au moins 65 % en poids d'éthylène.

5. Feuille ou article façonné suivant l'une au moins des revendications 1 à 4, caractérisé en ce que la matière plastique contient des charges.

6. Feuille ou article façonné suivant la revendication 5, caractérisé en ce que la matière plastique contient 8 à 28 % en poids de charges.

7. Feuille ou article façonné suivant l'une au moins des revendications précédentes, caractérisé en ce que les charges se présentent sous forme de silicate de potassium et d'aluminium, de talc, de craie, de kaolin, d'oxydes métalliques, notamment de dioxyde de titane, et/ou de noir de fumée.

8. Feuille ou article façonné suivant l'une au moins des revendications précédentes, caractérisé en ce que 40 à 70 parties en poids de copolymère éthylène-propylène correspondent à 60-30 parties en poids de terpolymère éthylène-propylène-diène dans la matière thermoplastique.

9. Feuille ou article façonné suivant l'une au moins des revendications précédentes, caractérisé en ce que l'homopolymère et/ou le copolymère d'éthylène et/ou de propylène présente lors du calandrage un indice d'écoulement à l'état fondu IEF (230/2,16) de 0,5 à 10 g/10 min, notamment de 0,8 à 2,5 g/10 min et, lors de l'extrusion, un indice d'écoulement à l'état fondu d'au moins 0,8 g/10 min, notamment de 2,5 à 25 g/10 min.

10. Feuille ou article façonné suivant l'une au moins des revendications précédentes, caractérisé en ce que le copolymère éthylène-propylène contient 5 à 20 % en poids d'éthylène.

11. Feuille ou article façonné suivant l'une au moins des revendications précédentes, caractérisé en ce que l'homopolymère de propylène, le copolymère propylène-éthylène ou le copolymère éthylène-propylène présente une répartition étroite de masse moléculaire avec une hétérogénéité U inférieure à 6, notamment inférieure à 4.

12. Feuille ou article façonné suivant l'une au moins des revendications précédentes, caractérisé en ce que le copolymère d'alcène est un copolymère d'éthylène qui contient 5 à 20 % en poids d'octène ou de butène comme comonomère.

13. Feuille ou article façonné suivant l'une au moins des revendications précédentes, caractérisé en ce que l'agent modificateur polymère partiellement cristallin et/ou amorphe présente un degré de cristallinité de 0 à 40 %, notamment de 5 à 25 %.

14. Feuille ou article façonné suivant l'une au moins des revendications précédentes, caractérisé en ce que l'agent modificateur polymère partiellement cristallin et/ou amorphe est un copolymère de styrène, notamment un copolymère styrène-acrylonitrile (SAN) modifié par un élastomère, un copolymère éthylène-acide acrylique et/ou éthylène-ester d'acide acrylique, un copolymère propylène-acide acrylique et/ou propylène-ester d'acide acrylique, un polyéthylène basse densité, un copolymère éthylène-acétate de vinyle, un terpolymère éthylène-acétate de vinyle-oxyde de carbone, un produit de copolymérisation d'éthylène et de méthacrylate de glycidyle, un polyuréthanne, une polycaprolactone, un polyéther-amide, un copolymère d'imide polyaliphatique et/ou un copolymère séquencé de styrène sous forme d'un copolymère séquencé, diséquencé ou triséquencé styrène-diène hydrogéné ou styrène-diène, tel qu'un copolymère séquencé styrène-éthylène-propylène (SEP), un copolymère séquencé styrène-éthylène-butadiène-styrène (SEBS), un copolymère séquencé styrène-éthylène-butadiène (SEB) et/ou un copolymère séquencé styrène-butadiène-styrène (SBS).

15. Feuille ou article façonné suivant la revendication 14, caractérisé en ce que le copolymère SAN modifié par un élastomère est un copolymère acrylonitrile éthylène-propylène-diène-styrène (A-EPDM-S), un copolymère acrylonitrile-styrène-ester acrylique (ASA) et/ou un poly(acrylonitrile-co-butadiène-co-styrène) (ABS).

16. Pièces façonnées par emboutissage profond à partir d'une feuille continue suivant l'une au moins des revendications 1 à 15 précédentes et corps composites formés de ces pièces, notamment pour aéronefs et véhicules automobiles, pour habillages intérieurs et éléments d'habillage de véhicules automobiles, de préférence panneaux de commande ou tableaux de bord, montants, revêtements latéraux, revêtements de portières, vide-poches et revêtements extérieurs de véhicules automobiles.
